## Europäisches Patentamt
## European Patent Office
## Office européen des brevets

(19)

(11) Publication number: **0 153 378**
**B1**

(12)

# EUROPEAN PATENT SPECIFICATION

(45) Date of publication of patent specification: **04.11.87**

(51) Int. Cl.⁴: **B 64 F 1/10, B 60 P 3/11**

(21) Application number: **84903171.1**

(22) Date of filing: **20.08.84**

(86) International application number:
**PCT/DK84/00077**

(87) International publication number:
**WO 85/00790 28.02.85 Gazette 85/05**

(54) **METHOD AND TRACTOR FOR TOWING AEROPLANES.**

(43) Date of publication of application:
**04.09.85 Bulletin 85/36**

(45) Publication of the grant of the patent:
**04.11.87 Bulletin 87/45**

(84) Designated Contracting States:
**AT BE CH DE FR GB LI LU NL SE**

(56) References cited:
**FR-A-2 386 450**
**US-A-3 005 509**
**US-A-3 255 840**
**US-A-4 375 244**

(73) Proprietor: BRUUN, Svend Aage Johan
23, Square Ambiorix, bte 43
B-1040 Bruxelles (BE)
(73) Proprietor: BIRKEHOLM, Mogens
Kagsavej 59
DK-2730 Herlev (DK)

(72) Inventor: BIRKEHOLM, Mogens
Kagsavej 59
DK-2730 Herlev (DK)

(74) Representative: Bauer, Robert, Dipl.-Ing. et al
Boeters, Bauer & Partner Patentanwälte
Thomas-Wimmer-Ring 14
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a method for towing an aeroplane by means of a tractor where the nose wheel of the aeroplane is supported on and secured to said tractor and where the tractor is operated by a tractor operator.

When towing aeroplanes and particularly large and heavy commercial aeroplanes at great speed safety is a very important factor because of the huge masses being moved. A great part thereof is moreover fuel. It is therefore important to ensure that no damage is done to the aeroplane and in this connection primarily to the nose wheel undercarriage whereto the tractor is usually coupled in some way or other.

From the specification to US—A—4 113 041 there is known a method whereby the nose wheel is secured against inadmissible forces occurring in the longitudinal direction, the force transmitted between tractor and aeroplane being continuously sensed and the sensing signal being applied for continuously controlling the power or braking of the tractor so that the force is constantly being kept within a permissible interval, ie. a force will not occur which the nose wheel structure cannot absorb. This known technique is applicable by a method of the present type as well as by a method where aeroplane and tractor are coupled by means of a towing bar. In both cases the nose wheel steering of the aeroplane has been put out of operation.

In the latter case the nose wheel is running on the ground and it has of course been dimensioned so as to absorb the forces that may occur when running on the ground even if due to side wind the wheel should hop and slide sideways. The situation is different when as described by the present method the nose wheel of the aeroplane is secured on the tractor. The frictional force on the nose wheel against the roadway is much larger in this case because the weight of the tractor must be taken into consideration, and therefore much larger transverse forces on the nose wheel structure may occur.

The object of the present invention is therefore to provide a method whereby it is possible to ensure that this structure is not exposed to inadmissible transverse forces when being towed.

The method according to the invention is characterised in that the sideways force exerted by the nose wheel on the tractor is continuously sensed and that when the sensing signal exceeds a specific permissible value, a steering corrrection is applied to the tractor said correction being dependent on the excess in such a manner that at least the excess is eliminated independently of the manoeuvers of the tractor operator.

It is thereby possible to ensure that no overloading occurs in the lateral direction. It should be noted that a certain amount of transverse forces will naturally in many cases, for example by side wind, be necessary to keep the course just as is the case by ordinary taxiing with the plane. When being towed the nose wheel steering of an aeroplane is generally put out of operation and the nose wheel can be freely turned by the tractor. Should the pilots find when towing that due to the steering described in the present invention—and that is in practice by strong side wind—the aeroplane deviates from the desired course then they will have to make use of two other means for correction, viz. the rudder and the main wheel brakes. As is well known, both these means are pedal controlled, a forward movement of for example the left foot activating the rudder to the left and a tipping of the left foot braking the port main wheel thus making the aeroplane turn aport. Gernerally, the pilot will first move his foot all the way forwards, ie. swing the rudder as far as possible, and should this not be sufficient, then tip the foot further, ie. stepping with the toe and braking the main wheels in one side till the desired effect is obtained. At high speeds this is of course a reflex movement made by the pilots. The present invention therefore enables the pilots to steer in quite the same manner as they normally do which is an advantage since they must have the superior responsiblity.

The nose wheel structure is thus as mentioned above secured against inadmissible forces occurring in the transverse direction. In the longitudinal direction it is possible to make provisions against impermissible transverse forces by means of a safety release but a preferred embodiment of the method is disclosed in claim 2. This embodiment is in keeping with the invention because also in this case the pilots will have to concentrate on the same control means, viz. the pedals. They only have to apply both pedals at once and at the same time should they find the speed too high or otherwise find any cause for braking to a stop.

It should be noted, moreover, that the invention not only does make it possible to correct the course by a gust of side wind, but the invention will of course also make it possible for the pilots to actively perform the steering.

The invention moreover relates to a tractor for performing the method and which is of the kind provided with a platform for supporting and securing the nose wheel. This tractor is characterized by having force sensing means arranged .in or by the platform or by its sides for sensing the sideways thrust against the nose wheel, and a calculator and control unit that on the basis of the sensing is adapted to act on the steering wheels of the tractor with a steering correction when the force exceeds a specific value so that the excess is at least eliminated.

One embodiment is characteristic in that the platform is mounted on transverse guides. It is thereby possible by suitably lubricating the guides or bearings of the slide to obtain a good measuring basis for the transverse force.

An improvement of this embodiment is characteristic in that at its sides the slide is provided with vertical plates for abutting the sides of the nose wheel and the mutual distance thereof being adjustable, the means for measuring the transverse force being constituted by one or more hydraulic piston cylinders that are connected to the slide and substantially retaining same and there being means for measuring the pressure in the cylinders. It is thereby possible in a simple manner to perform the desired continuous measuring at the same time as the nose wheel can be retained in a firm position.

An improvement of this construction is characteristic in that at its rear end the slide is provided with a leaf hinged at the bottom said leaf in its raised position being adapted to abut the rear of the nose wheel and being retained and controlled by a pressure cylinder.

It is thereby possible to measure the transverse force quite correctly. Should one think of the hinged lead for back plate being secured to the tractor, then consideration would have to be taken to the friction between the plate and the nose wheel when there is a pull between tractor and aeroplane and so the measuring of the transverse force would never be correct.

If the tractor is of the type which can steer on all four wheels with steering deflection in the same direction, ie. with so-called crab steering, it may be characteristic in that the calculator and control unit is adapted to give steering correction to all the tractor wheels. It is thereby possible to obtain a quicker control, ie. swinging in of the tractor to the desired position, particularly at low speed in sharp curves where the pilots might wish to take a course different from that chosen by the tractor operator.

Furthermore, the tractor according to the invention can be provided with a tableau indicating the type of aeroplane for which the calculator and control unit is set.

In connection with such a tableau the tractor according to the invention may on the outside at a visible place be provided with means for programming the type of aeroplane over and above corresponding means in the cab of the tractor, and that the calculator and control unit can be adapted to lock the drive means of the tractor as long as the two programmings are not identical.

It is thereby possible to obtain double security that the tractor is programmed for the correct type of aeroplane. It is for example possible to let another person than the tractor operator perform the adjustment on the outside.

Finally, the tractor according to the invention may be provided with means for measuring a torque or the reaction stemming from such torque around the axis of the nose wheel leg and means for releasing the connections between aeroplane and tractor and/or to block any further motion of the tractor should such torque occur.

As mentioned above, the nose wheel steering of an aeroplane is not operative when towing with a tractor, ie. The nose wheel can be freely turned within its turning angle. This measure serves the purpose of securing the nose wheel structure against overloading should the tractor operator when manoeuvering the plane happen to turn the nose wheel past the permissible limit, ie. having the effect that it hits a stop.

The invention will be further explained with reference to the drawing wherein:

Fig. 1 is a side view of an embodiment of a tractor according to the invention,

Fig. 2 is a top view of the tractor,

Fig. 3 is an enlarged top view being to some extent schematic of the central part of the tractor, and

Fig. 4 is a chart illustrating socalled input and output of a calculator and control unit for a tractor according to the invention.

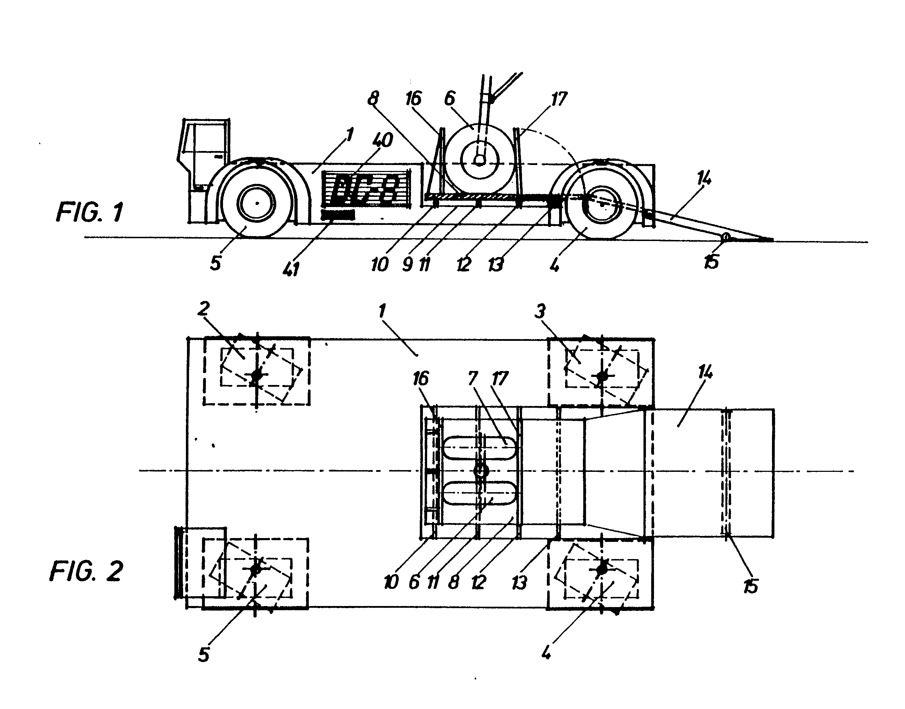

Figs. 1 and 2 can be seen together and show a tractor 1 having four steerable wheels 2, 3, 4, 5. There is moreover shown a set of wheels 6, 7 being the set of nose wheels of an aeroplane. For practical reasons the aeroplane itself is not shown. This set of wheels 6 and 7 is supported on a slide 8 that in its turn rests on a platform 9 on three transverse guides or bearers 10, 11 and 12. The slide 8 is flush with a chute 13 with a part 14 that can be raised and which is provided with a roller 15 so that the nose wheels 6 and 7 of the aeroplane can be wheeled up onto the platform 9 of the tractor by backing the tractor under the nose wheels 6 and 7. In front the nose wheels 6 and 7 abut a vertical front plate and at the back they are retained by a pivotable back plate 17. On the side of the tractor there is a tableau 40 showing the type of aeroplane which the tractor is presently programmed to tow. Furthermore, there is an outside panel 41 for the programming. On the other side of the tractor there may be provided similar arrangements. Fig. 2 only shows the parts securing the set of nose wheels 6 and 7 in the longitudinal direction or on the direction of travel.

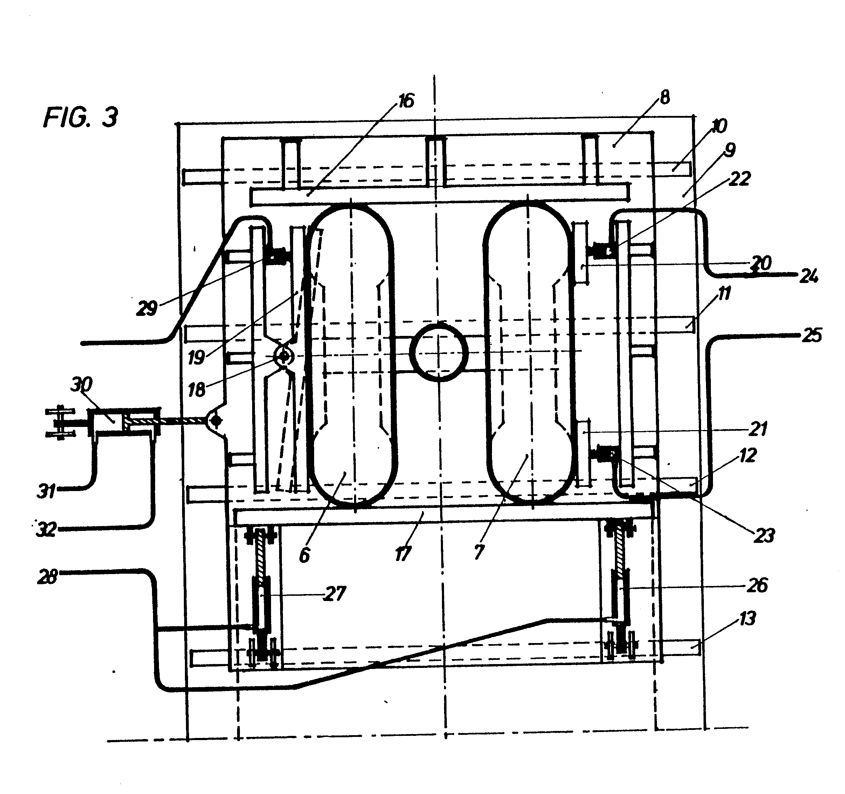

Fig. 3 shows the parts retaining the set of nose wheels 6 and 7 in greater detail and therefore also the parts retaining the set of nose wheels 6 and 7 in the transverse direction and which are decisive of the present invention.

The port nose wheel abuts on its outside a plate 19 secured to a vertical hinge 18, said plate 19 being fastened on the slide 8 that is movably mounted on the guides or bearers 10, 11 and 12. The starboard nose wheel 7 abuts on its outside a forwardly mounted plate 20 and a rearwardly mounted plate 21 which are both movably mounted in the transverse direction in piston cylinders 22 and 23 complete with pressure pipes 24 and 25. These plates 20 and 21 are also mounted on the slide 8.

Finally, the back plate 17 is mounted on the slide 8 and its tipping action and the retaining thereof in the substantially vertical position is provided for by two piston cylinders 26 and 27 arranged in parallel having a common pressure pipe 28.

Moreover, by the action of a piston cylinder 29 the plate 19 can be moved to the position shown in dotted lines where the nose wheels 6 and 7 are to be pressed up onto the slide and so ensure that the nose wheels 6 and 7 are correctly arranged.

Finally, the slide 8 is secured in a position around the centre of a double-acting piston cylinder 30 complete with closed pressure pipes 31 and 32 for sensing the transverse force. The pulling force can be sensed through the pressure pipe 28 which is of course also closed when towing. The pressure pipes 24 and 25 are activated when the nose wheels are in place in the longitudinal direction thereby pushing the nose wheels against the plate 19 whereafter the pressure pipes 24 and 25 are closed. Should a difference in pressure between these two pressure pipes then occur, it means that a torque around a vertical axis is applied to the nose wheel. In this connection it is assumed that friction between nose wheels and slide 8 is eliminated, for example by greasing the surface of the slide or by designing it with a smooth surface. This is also advantageous when locking or fixing the nose wheels by activating the piston cylinders 22 and 23.

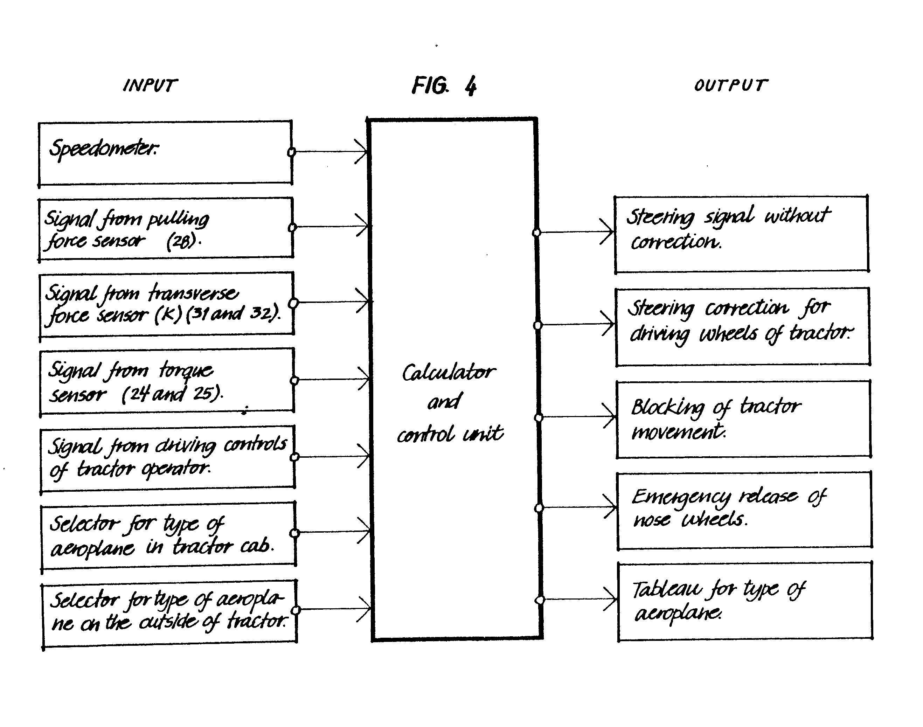

Fig. 4 schematically shows input and output of the calculator and control unit. The input is as shown the column to the left, whereas the output is the right column of the Figure.

A speedometer is required for the input because the steering correction for neutralising a given force will depend on the speed.

Furthermore, signals are given from pulling force and transverse force sensors, respectively, and from a torque sensor. The signal from the driving controls of the tractor will likewise have to pass the calculator and control unit because this is the signal which according to the invention may require correction. Finally, the calculator and control unit must have a signal for the type of aeroplane to be towed and perhaps also with an indication of the gross weight. For ensuring that this information is correct it may be programmed two places by two different persons each one of them having a key, if so desired. One place may be by the panel 41 and the other in the cab of the tractor. For further security the programming is shown on the tableau 40.

The calculator and control unit can then give a primary steering signal without correction corresponding to the steering manoeuver made by the tractor operator. Should this manoeuver, however, prove to be such that it overloads the nose wheel undercarriage with an impermissible transverse force, the calculator and control unit will give a steering correction on which the tractor operator will have no influence and which will cause the transverse force on the undercarriage of the nose wheel to be reset within the permissible limit. In practice meaures are of course taken so that this limit is never exceeded.

The calculator and control unit can moreover be designed in such a manner that it will effect an emergency release of the nose wheel of the aeroplane should the pulling force exceed the permissible limit. Furthermore, it may be designed so as to block the tractor movement and perhaps effect an emergency release should there occur a torque on the nose wheel undercarriage.

Finally, the calculator and control unit will control the tableau indicating the type of aeroplane which the tractor is set to tow.

**Claims**

1. Method for towing an aeroplane by means of a tractor (1) where the nose wheel (6, 7) of the aeroplane is supported on and secured to said tractor (1) and where the tractor (1) is operated by a tractor operator, characterised in that the sideways force exerted by the nose wheel (6, 7) on the tractor (1) is continuously sensed and that when the sensing signal exceeds a specific permissible value, a steering correction is applied to the tractor (1) said correction being dependent on the excess in such a manner that the excess is at least eliminated, independent of the manoeuvers of the tractor operator.

2. Method according to claim 1, characterised in that in a manner known per se the transmitted force between tractor (1) and aeroplane in the longitudinal direction is continuously sensed and that on the basis thereof the engine and the brakes of the tractor are controlled in such a manner that the force is kept within a permissible interval, preferably within the traction area.

3. Tractor (1) for performing the method according to claim 1 and which is provided with a slide (8) on a platform (9) for supporting the nose wheel (6) of an aeroplane characterised by force sensing means arranged in or by the slide (8) or by its sides for sensing the sideways thrust against the nose wheel (6, 7) and a calculator and control unit that on the basis of the sensing is adapted to act on the steering wheels (2, 3, 4, 5) of the tractor (1) with a steering correction when the force exceeds a specific value so that the excess is at least eliminated.

4. Tractor according to claim 3, characterised in that the slide (8) is mounted on the platform (9) through transverse guides (10).

5. Tractor according to claim 4, characterised in that at its sides the slide (8) is provided with vertical plates (19) for abutting the sides of the nose wheel (6, 7) and the mutual distance thereof being adjustable, the means for measuring the transverse force being constituted by one or more hydraulic piston cylinders (30) that are connected to the slide and substantially retaining same and there being means for measuring the pressure in the cylinders.

6. Tractor according to claim 5, characterised in that at its rear end the slide (8) is provided with a leaf (17) hinged at the bottom, said leaf in its raised position being adapted to abut the rear of the nose wheel (6, 7) and being retained and controlled by a pressure cylinder (26, 27).

7. Tractor according to claims 3, 4, 5 and 6 and which is of the type which can steer on all four wheels (2, 3, 4, 5) with steering deflection in the same direction, ie. with so-called crab steering, characterised in that the calculator and control unit is adapted to give steering correction to all the tractor wheels (2, 3, 4, 5).

8. Tractor according to claims 3, 4, 5, 6 or 7, characterised in that on its outside it is provided with one or more tableau (40, 41) indicating the type of aeroplane for which the calculator and control unit is set.

9. Tractor according to claim 8, characterised in that on the outside of the tractor at a place where a tableau (40, 41) is visible there are arranged means for programming the type of aeroplane over and above corresponding means in the cab of the tractor and that the calculator and control unit is adapted to lock the drive means of the tractor as long as the two programmings are not identical.

10. Tractor according to one or more of the preceeding claims, characterised by means (24, 25) for measuring a torque or the reaction stemming from such torque around the axis of the nose wheel (6, 7) leg and means for releasing the connections between aeroplane and tractor and/or to block any further motion of the tractor should such torque occur.

11. Tractor according to one or more of claims 3 to 10 having four wheels in rectangular configuration, ie. two wheel axes, characterised in that the supporting platform (9) for the nose wheel (6, 7) is situated between the two axes.

12. Tractor according to one or more of claims 3 to 11, characterised in means for securing the nose wheel to the tractor.

13. Tractor according to one or more precedent claims characterised in that the supporting platform (9) is situated centrally on the tractor.

14. Tractor according to claim 13, characterised in that the platform (9) is situated close to the geometrical centre of the road friction forces to be exerted on the tractor (1).

15. Tractor according to claim 13 or 14, characterised in means for securing the nose wheel (6, 7) to the supporting platform (9).

**Patentansprüche**

1. Verfahren zum Ziehen eines Flugzeugs mittels einer Zugmaschine (1), wobei das Bugrad (6, 7) des Flugzeugs von der Zugmaschine (1) getragen wird und daran festegelegt ist und wobei die Zugmaschine (1) von einem Zugmaschinenführer bedient wird, dadurch gekennzeichnet, daß die van dem Bugrad (6, 7) auf die Zugmaschine (1) ausgeübte seitliche kraft fortlaufend ermittelt und, wenn das betreffende Fühlersignal einen bestimmten zulässigen Wert überschreitet, an der Zugmaschine (1) eine Steuerungskorrektur vorgenommen wird, die von der Abweichung in solcher Weise abhängig ist, daß die Abweichung, unabhängig von den Manövern des Zugmaschinenführers, zumindest eleminiert wird.

2. Verfahren nach Anspruch 1, dadurch gekennzeichnet, daß in an sich bekannter Weise die zwischen Zugmaschine (1) und Flugzeug in der Längsrichtung übertragene Kraft fortlaufend ermittelt und daß auf dieser Grundlage die Antriebsmaschine und die Bremsen der Zugmaschine in solcher Weise gesteuert werden daß die Kraft innerhalb eines zulässigen Bereichs, vorzugsweise innerhalb des Zugbereiches, verbleibt.

3. Zugmaschine (1) zur Durchführung des Verfahrens nach Anspruch 1, die einen Schlitten (8) auf einer Plattform (9) zur Aufnahme des Bugrades (6, 7) eines Flugzeugs aufweist, gekennzeichnet durch Kraftfühlmittel in oder an dem Schlitten (8) oder an seinen Seiten zur Ermittlung der auf das Bugrad (6, 7) ausgeübten Seitenkraft sowie eine Rechen- und Steuereinheit, die aufgrund des so ermittelten Wertes in der Lage ist auf die gelenkten Räder (2, 3, 4, 5) der Zugmaschine (1) mit einer Steuerungskorrektur einzuwirken, wenn die Kraft einen bestimmten Wert überschreitet, derart, daß die Überschreitung zumindest eliminiert wird.

4. Zugmaschine nach Anspruch 3, dadurch gekennzeichnet, daß der Schlitten (8) auf der Plattform (9) über querverlaufende Führungen (10) gelagert ist.

5. Zugmaschine nach Anspruch 4, dadurch gekennzeichnet, daß der Schlitten (8) an seinen Seiten vertikale Platten (13) zur Anlage an den Seiten des Bugrades (6, 7) aufweist, deren gegenseitiger Abstand einstellbar ist, daß die Mittel zum Messen der quergerichteten Kraft von einem oder mehreren Hydraulikzylindern (30) gebildet werden, die mit dem Schlitten verbunden sind und diesen im wesentlichen festhalten und daß Mittel zum Messen des Druckes in den Zylindern vorgesehen sind.

6. Zugmaschine nach Anspruch 5, dadurch gekennzeichnet, daß der Schlitten (8) an seinem rückwärtigen Ende ein an der Unterseite angelenktes Blatt (17) aufweist, das in seiner angehobenen Position in der Lage ist, sich gegen die Rückseite des Bugrades (6, 7) zu legen, und von einem Druckylinder (26, 27) festgehalten und gesteuert wird.

7. Zugmaschine nach Anspruch 3, 4, 5 und 6, bei der alle vier Räder (2, 3, 4, 5) mit Lenkausschlägen in der gleichen Richtung lenkbar sind, d.h. mit sogenannter Krebs-Steuerung, dadurch gekennzeichnet, daß die Rechen- und Steuereinheit in der Lage ist, eine Steuerkorrektur an alle Zugmaschinenräder (2, 3, 4, 5) zu liefern.

8. Zugmaschine nach Anspruch 3, 4, 5, 6 oder 7, dadurch gekennzeichnet, daß sie an ihrer Außenseite eine oder mehrere Tafeln (40, 41) aufweist, die den Typ des Flugzeugs anzeigen, für den die Rechen- und Steuereinheit eingestellt ist.

9. Zugmaschine nach Anspruch 8, dadurch gekennzeichnet, daß sich an der Außenseite der Zugmaschine an einer Stelle, wo eine Tafel (40, 41) sichtbar ist, Mittel zur Eingabe des Flugzeugtyps außer entsprechenden Mitteln in der Kabine der Zugmaschine befinden und daß die Rechen- und Steuereinheit in der Lage ist, die Antriebsmittel der Zugmaschine so lange zu blockieren, wie die beiden Eingaben nicht identisch sind.

10. Zugmaschine nach einem oder mehreren der vorhergehenden Ansprüche, gekennzeichnet durch Mittel (24, 25) zum Messen eines Drehmoments oder der Reaktionskraft aus einem solchen Drehmoment um die Achse des Bugradbeines und Mittel zum Lösen der Verbindungen zwischen Flugzeug und Zugmaschine und/oder zur Blockierung jeder weiteren Bewegung der Zugmaschine für den Fall, daß ein solches Drehmoment auftritt.

11. Zugmaschine nach einem oder mehreren der Ansprüche 3 bis 10, die vier Räder in rechteckiger Anordnung, d.h. zwei Radachsen, aufweist, dadurch gekennzeichnet, daß die Trägerplattform (9) für das Bugrad (6, 7) zwischen den beiden Achsen angeordnet ist.

12. Zugmaschine nach einem mehreren der Ansprüche 3 bis 11, gekennzeichnet durch Mittel zur Festlegung des Bugrades an der Zugmaschine.

13. Zugmaschine nach einem oder mehreren vorhergehenden Ansprüchen, dadurch gekennzeichnet, daß sich die Tragplattform (9) mittig auf der Zugmaschine befindet.

14. Zugmaschine nach Anspruch 13, dadurch gekennzeichnet, daß die Plattform (9) in der Nähe des geometrischen Zentrums der auf die Zugmaschine (1) auszuübenden Straßenreibungskräfte auftritt.

15. Zugmaschine nach Anspruch 13 oder 14, gekennzeichnet durch Mittel zur Festlegung des Bugrades (6, 7) auf der Tragplattform (9).

**Revendications**

1. Procédé pour remorquer un avion à l'aide d'un tracteur (1), selon lequel la roue avant (6, 7) de l'avion est supportée par ledit tracteur (1) auguel elle est fixée et selon lequel le tracteur (1) est commandé par un opérateur de tracteur, caractérisé en ce que l'effort latéral exercé par la roue avant (6, 7) sur le tracteur (1) est détecté en continu et en ce que, lorsque le signal de détection depasse une valeur admissible déterminée, une correction d'orientation est appliquée au tracteur (1), ladite correction étant fonction de l'excédent, de façon que l'excédent soit au moins éliminé, indépendamment des manoeuvres de l'opérateur du tracteur.

2. Procédé selon la revendication 1, caractérisé en ce que, de manière connue en soi, l'effort transmis entre le tracteur (1) et l'avion dans le sens longitudinal est détecté en continu et en ce que, en fonction de cette détection, le moteur et les freins du tracteur sont commandés de sorte que l'effort soit maintenu dans une fourchette admissible, de préférence dans la zone de traction.

3. Tracteur (1) pour la mise en oeuvre du procédé selon la revendication 1, et qui comprend une glissière (8) sur une plateforme (9) pour porter la roue avant (6) d'un avion, caractérisé par des moyens de détection disposés sur ou à côté de la glissière (8) pour détecter la poussée latérale s'exerçant sur la roue avant (6, 7), et une unité de calcul et de commande que est agencée, en fonction de la détection, pour agir sur les roues orientables (2, 3, 4, 5) du tracteur (1) pour leur appliquer une correction d'orientation lorsque l'effort dépasse une valeur déterminée, de sorte que l'excédent soit au moins éliminé.

4. Tracteur selon la revendication 3, caractérisé en ce que la glissière (8) est montée sur la plateforme (9) par l'intermédiaire de guides transversaux (10).

5. Tracteur selon la revendication 4, caractérisé en ce que, sur ses côtés, la glissière (8) comporte des plaques verticales (13) destinées à entrer en butée contre les côtés de la roue avant (6, 7) et la distance mutuelle de celles-ci étant réglable, les moyens de mesure de l'effort transversal étant constitués par un ou plusieurs vérins hydrauliques (30) qui sont raccordés à la glissière pour la retenir sensiblement, des moyens étant prévus pour mesurer la pression régnant dans les vérins.

6. Tracteur selon la revendication 5, caractérisé en ce que, à son extrémité arrière, la glissière (8) comporte un panneau (17) articulé par le bas, ledit panneau étant en position soulevée, agencé pour entrer en butée contre l'arrière de la roue avant (6, 7) et étant retenu et commandé par un vérin (26, 27).

7. Tracteur selon les revendications 3, 4, 5 et 6 et qui est du type ayant quatre roues orientables (2, 3, 4, 5), la déviation de la direction étant de même sens, à savoir une direction en crabe, caractérisé en ce que l'unité de calcul et de commande est agencée pour appliquer une correction d'orientation sur toutes les roues (2, 3, 4, 5) du tracteur.

8. Tracteur selon les revendications 3, 4, 5, 6 ou 7, caractérisé en ce qu'il comporte extérieurement un ou plusieurs tableaux (40, 41) indiquant le type d'avion pour lequel l'unité de calcul et de commande est réglée.

9. Tracteur selon la revendication 8, caractérisé en ce que des moyens sont prévus sur l'extérieur du tracteur en un emplacement où un tableau (40, 41) est visible, pour programmer le type d'avion outre les moyens correspondants dans la cabine du tracteur et en ce que l'unité de calcul et de commande est agencée pour verrouiller les moyens d'entraînement du tracteur tant que les deux programmes ne sont pas identiques.

10. Tracteur selon l'une ou plusieurs des revendications précédentes, caractérisé par des moyens (24, 25) de mesure d'un couple ou de la réaction due à un tel couple autour de l'axe de la jambe de la roue avant (6, 7) et des moyens destinés à libérer les liaisons entre l'avion et le tracteur et/ou à bloquer tout mouvement ultérieur du tracteur si un tel couple se produit.

11. Tracteur selon l'une ou plusieurs des revendications 3 à 10 comprenant quatre roues disposées selon une configuration rectangulaire, c'est-à-dire à deux axes de roues, caractérisé en ce que la plateforme (9) de support de la roue avant (6, 7) est située entre les deux axes.

12. Tracteur selon l'une ou plusieurs des revendications 3 à 11, caractérisé en ce qu'il comprend des moyens pour fixer la roue avant sur le tracteur.

13. Tracteur selon l'une ou plusieurs des revendications précédentes, caractérisé en ce que la plateforme de support (9) est située au centre du tracteur.

14. Tracteur selon la revendication 13, caractérisé en ce que la plateforme (9) est située à proximité du centre géométrique des efforts de frottement excercés par la piste sur le tracteur (1).

15. Tracteur selon la revendication 13 ou 14, caractérisé en ce qu'il comprend des moyens pour fixer la roue avant (6, 7) sur la plateforme de support (9).

FIG. 1

FIG. 2

FIG. 3

| INPUT | | OUTPUT |
|---|---|---|
| Speedometer. | | |
| Signal from pulling force sensor (28). | | Steering signal without correction. |
| Signal from transverse force sensor (K) (31 and 32). | Calculator and control unit | Steering correction for driving wheels of tractor. |
| Signal from torque sensor (24 and 25). | | Blocking of tractor movement. |
| Signal from driving controls of tractor operator. | | Emergency release of nose wheels. |
| Selector for type of aeroplane in tractor cab. | | Tableau for type of aeroplane. |
| Selector for type of aeroplane on the outside of tractor. | | |

0 153 378